# EUROPÄISCHE PATENTSCHRIFT

(11) **EP 1 476 269 B1**
(45) Veröffentlichungstag und Bekanntmachung des Hinweises auf die Patenterteilung: **21.10.2009**
(21) Anmeldenummer: 03742523.8
(22) Anmeldetag: 15.02.2003
(51) Int. Cl.: B23B 51/02, B23C 5/10, B23D 77/02

(54) **RUNDLAUFSCHNEIDWERKZEUG MIT AUSWECHSELBAREM SCHNEIDEINSATZ**
ROTARY CUTTING TOOL COMPRISING AN EXCHANGEABLE CUTTING INSERT
OUTIL DE COUPE ROTATIF A PIECE DE COUPE RAPPORTEE INTERCHANGEABLE

(30) Priorität: 21.02.2002 DE 10207257
(43) Veröffentlichungstag der Anmeldung: 17.11.2004
(73) Patentinhaber: KENNAMETAL INC., Latrobe, PA 15650-0231 (US)
(72) Erfinder: BORSCHERT, Bernhard, 96050 Bamberg (DE); MÜHLFRIEDEL, Dieter, 91320 Ebermannstadt (DE); SCHWÄGERL, Jürgen, 92648 Vohenstrauss (DE); RUY FROTA DE SOUZA, Filho, Latrobe, PA 15650 (US); SHULZ, Michael, D., Derry 15627 (US); McCOMICK, Michael, R, Greensburg (US); Erickson, Robert A., North Carolina (US)
(74) Vertreter: Tergau & Pohl Patentanwälte
(86) Internationale Anmeldenummer: PCT/EP2003/001526
(87) Internationale Veröffentlichungsnummer: WO 2003/070408

(56) Entgegenhaltungen:
- EP-A- 0 118 806
- DE-A- 19 543 233
- DE-A- 19 945 097
- US-A- 6 059 492
- US-B1- 6 506 003

## Beschreibung

Die Erfindung betrifft ein aus einem Werkzeugschaft und einem auswechselbaren Schneideinsatz zusammengesetztes Rundlaufschneidwerkzeug, insbesondere ein Bohrwerkzeug. Die Erfindung betrifft weiterhin einen Schneideinsatz für ein solches werkzeug.

Das Dokument DE 195 43 233 A (Abbildungen 11 bis 13) offenbart ein Rundlaufwerkzeug, zusammengesetzt aus einem Werkzeugschaft mit mindestens einer Spannut und einem auswechselbaren Schneideinsatz, bei welchem sich an der Schaftspitze sowie in der Wand der Spannut eine Ausnehmung zur Aufnahme des Schneideinsatzes befindet, die schaftseitig durch einen Rand begrenzt ist, gegen den die schaftseitige Schmalseite des Schneideinsatzes anliegt, und bei welchem der Schneideinsatz einen Befestigungszapfen zur Aufnahme in einer zur Werkzeugachse konzentrischen Aufnahmeöffnung des Werzeugschaftes aufweist, wobei der Werkzeugschaft an dessen Umfang einen Schenkel mit einer an den Umfang des Werkzeugschaftes grenzenden Anlagefläche aufweist, die relativ zur Werkzeugachse schräg gestellt ist und mit einer ebenso schräg gestellten Anlagefläche an einem Flügel des Schneideinsatzes korrespondiert, wobei der Scheideinsatz die Schaftspitze des Werkzeugschaftes nur teilweise abdeckt.

Das am 14. Januar 2003 offenbarte Dokument US 6,506,003 B1 offenbart ein Rundlaufschneidwerkzeug, zusammengesetzt aus einem Werkzeugschaft mit mindestens einer Spannut und einem auswechselbaren Schneideinsatz, bei welchem sich an der Schaftspitze sowie in der Wand der Spannut eine Ausnehmung zur Aufnahme des Schneideinsatzes befindet, die schaftseitig durch einen Rand begrenzt ist, gegen den die schaftseitige Schmalseite des Schneideinsatzes anliegt, und bei welchem der Schneideinsatz einen Befestigungszapfen zur Aufnahme in einer zur Werkzeugachse konzentrischen Aufnahmeöffnung des Werkzeugschaftes aufweist, wobei der Werkzeugschaft an dessen Umfang einen Schenkel mit einer an den Umfang des Werkzeugschaftes grenzenden Anlagefläche aufweist, die relativ zur Werkzeugachse schräg gestellt ist und mit einer ebenso schräg gestellten

Anlagefläche an einem Flügel des Schneideinsatzes korrespondiert, wobei die Anlageflächen relativ zur Werkzeugachse einen Anlagewinkel von 15° einnehmen und die Orientierung der Schrägstellung der Anlageflächen der Werkzeugdrehrichtung entspricht, so dass durch die schräg gestellten Anlageflächen beim Eindrehen des Scheideinsatzes dieser gegen den Werkzeugschaft gepresst wird. Der Schneideinsatz des Werkzeugs dieses Dokuments deckt die Schaftspitze des Werkzeugschafies vollständig ab.

Ein weiteres Bohrwerkzeug mit auswechselbarem Schneideinsatz ist beispielsweise aus der EP 0 118 806 B1 bekannt. Dieses Bohrwerkzeug weist einen Werkzeugschaft mit einer Aufnahme auf, in die ein Befestigungszapfen des Schneideinsatzes einsetzbar ist. Beim Einsetzen des Schneideinsatzes wird dieser gegenüber dem Werkzeugschaft um einen Winkel von ca. 45° verdreht. Ein zusätzliches Befestigungselement ist nicht vorgesehen. Der Schneideinsatz und der Werkzeugkörper können derart gestaltet sein, dass sich die schaftseitige Schmalseite der Schneidplatte gegen den schaftseitigen Rand der Ausnehmung im Werkzeugschaft verspannt. Eine axiale Kraft zwischen dem Werkzeugschaft und dem Schneideinsatz kann dadurch erzeugt werden, dass der schaftseitige Rand der Ausnehmung in Eindrehrichtung leicht ansteigt, wobei der Befestigungszapfen mittels einer schaftseitigen Verbreiterung gegen Herausziehen aus dem Werkzeugschaft gesichert ist. Hierdurch wird beim Eindrehen des Schneideinsatzes in den Plattensitz eine Verspannung erzeugt, die sich beim Bohren mit steigenden Schnittkräften verstärkt. Die durch diese Verspannung entstehende Axialkraft zieht den Schneideinsatz vom Werkzeugkörper weg. Die Stabilität der Halterung des Schneideinsatzes am Werkzeugschaft sowie die mechanische Belastbarkeit des gesamten Bohrwerkzeugs sind dadurch eingeschränkt.

Nach einer anderen Ausführung des aus der EP 0 118 806 B1 bekannten Bohrwerkzeugs weist der mittig am Schneideinsatz angeordnete Befestigungszapfen Anlageflä-chen auf, die leicht spiralig im Bohr-Drehsinn ansteigen. Durch diese leicht spiralige Ausbildung der Anlageflächen des Befestigungszapfens, die mit entsprechend geformten Anlageflächen der Aufnahme des Werkzeugschaftes in Kontakt sind, wird eine Axialkraft auf den Schneideinsatz in Richtung zum Werkzeugkörper hin ausgeübt. Diese Axialkraft wirkt in voller Höhe auf den im Vergleich zum Bohrerdurchmesser gering dimensionierten und daher gering mechanisch belastbaren Befestigungszapfen. Zusätzlich wird auf den Befestigungszapfen ein Drehmoment ausgeübt, das die mechanische Belastbarkeit der Verbindung zwischen Werkzeugschaft und Schneideinsatz weiter einschränkt.

Der Erfindung liegt die Aufgabe zugrunde, ein aus einem Werkzeugschaft und einem Schneideinsatz ohne weiteres Befestigungsmittel zusammengesetztes Rundlaufschneidwerkzeug, insbesondere einen Bohrer, anzugeben, das eine besonders stabile und belastbare Verbindung zwischen dem Werkzeugschaft und dem Schneideinsatz aufweist. Der Erfindung liegt weiterhin die Aufgabe zugrunde, einen für ein derartiges Rundlaufschneidwerkzeug geeigneten Schneideinsatz anzugeben.

Diese Aufgabe wird erfindungsgemäß gelöst durch die Merkmale des Anspruchs 1 sowie des Anspruchs 2. Hierbei weist ein Werkzeugschaft eines Rundlaufschneidwerkzeuges mit auswechselbarem Schneideinsatz am Werkzeugumfang einen vorzugsweise insgesamt schräg zur Werkzeugachse gestellten Schenkel auf. In diesen Schenkel oder Führungslappen greift eine entsprechend schräg gestellte Anlagefläche eines Flügels des Schneideinsatzes ein. Durch diese schräg gestellten Anlageflächen am Werkzeugumfang wird beim Eindrehen des Schneideinsatzes in den Werkzeugschaft eine Kraft erzeugt, die den Schneideinsatz gegen den Werkzeugschaft presst. Diese axiale Einpresskraft steigt bei der Nutzung des Werkzeuges mit steigenden Schnittkräften. Zur Übertragung des Drehmoments zwischen dem Schneideinsatz und dem Werkzeugschaft steht der äußere Durchmesserbereich des Schneideinsatzes beziehungsweise des Werkzeugschaftes zur Verfügung. Durch die Anordnung der Anlageflächen am Werkzeugumfang werden die zur Drehmomentübertragung zwischen Werkzeugschaft und Schneideinsatz benötigten Kräfte auf das geringst mögliche Maß begrenzt.

Der Schneideinsatz deckt den Werkzeugschaft an dessen Schaftspitze nur teilweise ab. Insbesondere ist der Schenkel des Werkzeugschaftes an der Schaftspitze nicht oder lediglich teilweise vom Schneideinsatz abgedeckt. Damit kann sich die Anlagefläche des Schneideinsatzes annähernd über dessen gesamte Höhe, mit Ausnahme des Befestigungszapfens, erstrecken. Auf diese Weise ist eine besonders großflächige Kraft- und Drehmomentübertragung zwischen Schneideinsatz und Werkzeugkörper gewährleistet. Der zur Drehmomentübertragung vorgesehene Schenkel am Umfang des Werkzeugkörpers erstreckt sich vorzugsweise nahezu über die gesamte Höhe des Flügels des Schneideinsatzes, so dass der Flügel den Schenkel an der Schaftspitze nur geringfügig überragt.

Die Axialkraft, die den Schneideinsatz in Richtung zum Werkzeugkörper zieht, ist vom Anlagewinkel abhängig, den die Anlageflächen des Schneideinsatzes sowie des Werkzeugschaftes gegenüber der Werkzeugachse einnehmen. Gemäß dem Anspruch 1 werden sowohl eine ausreichend hohe Axialkraft als auch eine stabile Ausbildung des Schenkels des Werkzeugschaftes sowie des Flügels des Schneideinsatzes realisiert mit einem Anlagewinkel von mindestens 15° und höchstens 60°, vorzugsweise 30°. Im Fall einer wendelförmigen Ausbildung der Spannut entspricht der Anlagewinkel gemäß Anspruch 2 dem Drallwinkel der Spannut.

Der Durchmesser des Schneidkörpers ist bevorzugt geringfügig größer als der Werkzeugschaftdurchmesser. Somit ist auf einfache Weise sicher gestellt, dass bei der spanabhebenden Bearbeitung ausschließlich der Schneideinsatz die Werkstückoberfläche bearbeitet.

Der Schneideinsatz wird beim Einsetzen in den Werkzeugschaft zunächst mit dem Befestigungszapfen in eine Aufnahmeöffnung eingesetzt und anschließend, vergleichbar einem Bajonettverschluss, gedreht. Um nach dem Einsetzen des Schneideinsatzes vor dem Drehen eine definierte axiale Position des Schneideinsatzes gegenüber dem Werkzeugschaft sicher zu stellen, ist nach einer bevorzugten Weiterbildung sowohl am Werkzeugschaft als auch am Schneideinsatz ein Führungsabsatz vorgesehen.

Der Befestigungszapfen sowie die korrespondierende Aufnahme des Werkzeugschaftes sind vorzugsweise derart ausgebildet, dass sich der Befestigungszapfen beim Eindrehen des Schneideinsatzes in den Werkzeugschaft verspannt. Hierzu kann der Befestigungszapfen einen elliptischen Querschnitt aufweisen, während die Aufnahmeöffnung einen kreisrunden Querschnitt hat. Die elliptische Ausbildung ausschließlich des Befestigungszapfens hat den Vorteil, dass bei der Herstellung des Werkzeuges ausschließlich eine Außenkontur, nämlich am Schneideinsatz, elliptisch auszubilden ist, während auf eine elliptische Ausbildung einer Bohrung, die fertigungstechnisch sehr aufwändig wäre, verzichtet werden kann. Anstelle eines im wesentlichen zylinderförmigen Zapfens, gegebenenfalls mit einem leicht elliptischen Querschnitt, kann der Schneideinsatz auch einen Zapfen mit einer Kegelform aufweisen. Die in diesem Fall kegelförmige Aufnahme des Werkzeugschaftes kann ebenfalls in fertigungstechnisch vorteilhafter Weise einen vom Zapfenquerschnitt geringfügig abweichenden, kreisförmigen Querschnitt aufweisen. Der Zapfen kann sich nach unten, das heißt zum Werkzeugschaft hin, kegelförmig verjüngen, wodurch ein besonders leichtes Einsetzen des Zapfens in den Werkzeugschaft ermöglicht ist, oder alternativ nach unten aufweiten, wodurch in Kombination mit der elliptischen Querschnittsform die Verspannung des Schneideinsatzes im Werkzeugschaft verstärkt wird. Ein Einsetzen und Verspannen des Schneideinsatzes im Werkzeugschaft ist in jedem Fall problemlos möglich, da die Aufnahmeöffnung des Werkzeugschaftes an den Spannuten offen ist.

Nach einer bevorzugten Weiterbildung weisen sowohl der Schenkel des Werkzeugschaftes als auch der Flügel des Schneideinsatzes jeweils zusätzlich zur Anlagefläche eine entgegengesetzt zu dieser schräg zur Werkzeugachse gestellte Zusatzanlagefläche auf. Die Zusatzanlageflächen schließen sich vorzugsweise an die Anlageflächen an, wobei eine in Relation zu den Anlageflächen und Zusatzanlageflächen gering dimensionierte Übergangsfläche zwischen diesen Flächen vorgesehen sein kann. Indem die Anlageflächen der Werkzeugspitze und die Zusatzanlageflächen dem Werkzeugschaft zugewandt sind, ist eine gezielte Verstärkung des beim bestimmungsgemäßen Einsatz des Werkzeugs mechanisch besonders belasteten Übergangsbereichs zwischen den Schenkeln und dem angrenzenden Bereich des Werkzeugschaftes gegeben. Insgesamt bilden die Anlage- und Zusatzanlageflächen eine großflächige Kontaktfläche zur Kraft- und Drehmomentübertragung zwischen dem Werkzeugschaft und dem Schneideinsatz. Hierbei grenzen sowohl die Anlageflächen als auch die Zusatzanlageflächen - abgesehen von gegebenenfalls vorhandenen Fasen an den einzelnen Flächen - an den Werkzeugumfang, so dass hinsichtlich der Drehmomentübertragung besonders günstige geometrische Verhältnisse gegeben sind.

Ähnlich der Anlageflächen, welche einen Anlagewinkel von 15° bis 60° zur Werkzeugachse einnehmen, sind die Zusatzanlageflächen vorzugsweise um einen Zusatzanlagewinkel von -10° bis -60° schräg zur Werkzeugachse gestellt. Bevorzugt sind die Zusatzanlageflächen betragsmäßig um einen geringeren Winkel schräg gestellt als die Anlageflächen.

Während durch die Anlageflächen eine axiale Kraft erzeugt wird, die den Schneideinsatz zum Werkzeugschaft zieht, bewirken die Zusatzanlageflächen eine axiale Kraft in entgegengesetzter Richtung. Um sicherzustellen, dass eine resultierende Kraft den Schneideinsatz am Werkzeugschaft festzieht, ist die sogenannte Anlagehöhe, bezogen auf die Werkzeugachse, über welche sich die Anlagefläche des Schenkels erstreckt, bevorzugt größer als die sogenannte Gegenanlagehöhe, über welche sich die Zusatzanlagefläche des Schenkels erstreckt. Entsprechendes gilt für die Anlagefläche und Zusatzanlagefläche am Flügel des Schneideinsatzes. Die unterschiedliche Dimensionierung der Anlageflächen einerseits und der Zusatzanlageflächen andererseits hat somit den gleichen Effekt, nämlich die Erzeugung einer resultierenden anziehenden Kraft zwischen Werkzeugschaft und Schneideinsatz beim Betrieb des Werkzeugs, wie die betragsmäßig unterschiedliche Schrägstellung der verschiedenen Flächen.

Die Aufgabe wird erfindungsgemäß weiterhin gelöst durch einen Schneideinsatz mit den Merkmalen des Anspruchs 13.

Nachfolgend wird ein Ausführungsbeispiel der Erfindung anhand einer Zeichnung näher erläutert. Darin zeigen:
- Fig. 1: ein aus einem Bohrerschaft und einem Schneideinsatz zusammenge- setztes Rundlaufschneidwerkzeug,
- Fig. 2: den Werkzeugschaft des Rundlaufschneidwerkzeuges nach Fig. 1,
- Fig. 3: den Schneideinsatz des Rundlaufschneidwerkzeuges nach Fig. 1,
- Fig. 4: im Querschnitt den Werkzeugschaft mit gelöstem Befestigungszapfen des Schneideinsatzes,
- Fig. 5: im Querschnitt den Werkzeugschaft mit gespanntem Befestigungszapfen des Schneideinsatzes,
- Fig. 6: ein aus einem Werkzeugschaft und einem Schneideinsatz zusammenge- setztes Rundlaufschneidwerkzeug in einer alternativen Ausführungsform,
- Fig. 7: den Werkzeugschaft des Rundlaufschneidwerkzeugs nach Fig. 6,
- Fig. 8: ein Detail des Werkzeugschaftes nach Fig. 7,
- Fig. 9: den Schneideinsatz des Rundlaufschneidwerkzeugs nach Fig. 6, und
- Fig. 10: ein Detail des Schneideinsatzes nach Fig. 9.

Einander entsprechende Teile sind in allen Figuren mit den gleichen Bezugszeichen versehen.

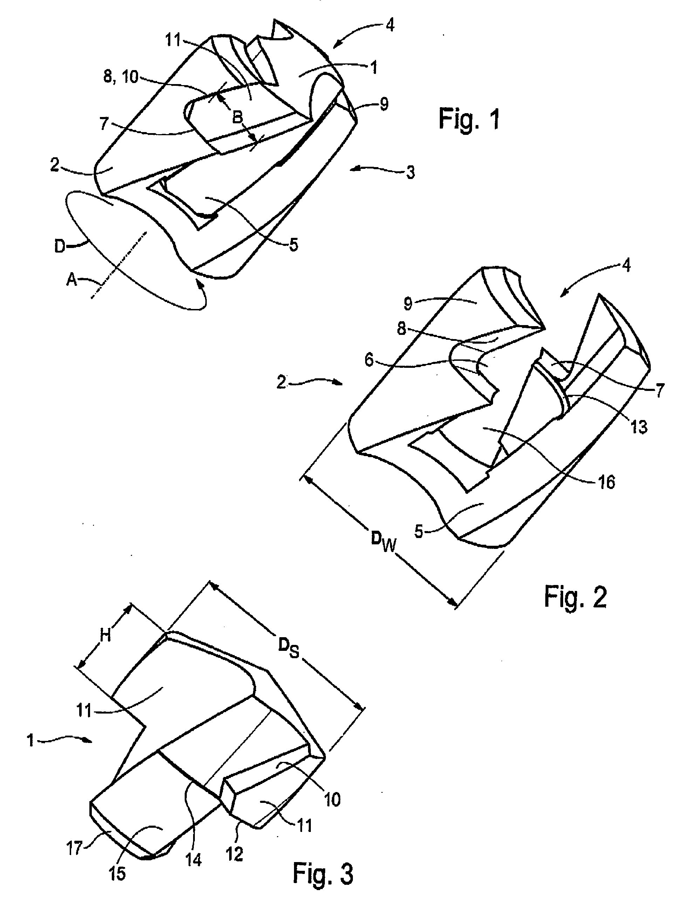

Die Figuren 1 bis 3 zeigen perspektivisch einen Schneidkörper oder Schneideinsatz 1 sowie einen Bohrerschaft oder Werkzeugschaft 2 eines als Bohrer ausgebildeten Rundlaufschneidwerkzeugs 3. In analoger Weise kann beispielsweise auch ein Senk-, Fräs- oder Reibwerkzeug aufgebaut sein. Als Werkstoffe für den Schneideinsatz 1 kommen insbesondere Hartmetall, Cermet, Keramik und HSS, jeweils beschichtet oder unbeschichtet, in Betracht. Eine Bestückung eines Schneideinsatzes 1 mit PKD oder CBN ist möglich. Der Schneideinsatz 1 ist beispielsweise entweder in konventioneller Weise durch Schleifen fertig bearbeitet oder mit Hilfe des so genannten "Metal Injecting Molding" (MIM) Verfahrens hergestellt. Der Schneidkörper 1 ist an der Schaftspitze 4 des Werkzeugschaftes 3 in diesen einsetzbar. Hierzu sowie zum Lösen des Schneideinsatzes 1 vom Bohrerschaft 2 ist ein nicht dargestellter Schlüssel zu verwenden. Die Werkzeugdrehrichtung ist mit D gekennzeichnet, die Werkzeug- oder Bohrerachse mit A. Der vorzugsweise aus Stahl oder Hartmetall gefertigte Bohrerschaft 2 weist zwei wendelförmige Spannuten 5 auf, die sich von einer nicht dargestellten Bohreraufnahme bis zur Schaftspitze 4 erstrecken. Alternativ zu den zwei wendelförmigen Spannuten 5 kann der Bohrerschaft 2 auch eine hiervon abweichende Anzahl gerader oder wendelförmiger Spannuten aufweisen. Zwei an die Spannuten 5 grenzende Ausnehmungen 6 an der Schaftspitze 4 weisen jeweils einen senkrecht zur Bohrerachse A verlaufenden Rand 7 sowie eine schräg zur Bohrerachse A verlaufende Anlagefläche 8 auf. Die Anlagefläche 8 begrenzt jeweils einen Schenkel 9 am Umfang des Bohrerschaftes 2. Bei zusammengesetztem Bohrer 3 liegt an der Anlagefläche 8 des Schenkels 9 eine Anlagefläche 10 eines Flügels 11 des Schneideinsatzes 1 an. Die Anlageflächen 8, 10 sind derart relativ zur Werkzeugachse A schräg gestellt, dass sich der Schneideinsatz 1 bei Rotation des Rundlaufschneidwerkzeugs 3 in Werkzeugdrehrichtung D am Bohrerschaft 2 festzieht. Die Schrägstellung der Anlageflächen 8, 10 relativ zur Werkzeugachse A entspricht dem Drallwinkel der Spannuten 5. Die Flügel 11 des Schneideinsatzes 1 weisen somit längs der Bohrerachse A eine über annähernd deren gesamte Höhe H eine konstante Breite B auf.

Die Flügel 11 des Schneidkörpers 1 überragen den Bohrerschaft 2 an der Schaftspitze 4 geringfügig. Die Schenkel 9 sind an der Schaftspitze 4 durch den Schneideinsatz 1 nicht abgedeckt. Der Schneidkörperdurchmesser D_{S} des Schneideinsatz 1 ist geringfügig größer als der Werkzeugschaftdurchmesser D_{W}. Der Übergang zwischen dem Rand 7 des Bohrerschaftes 2 und der anschließenden Anlagefläche 8 des Schenkels 9 ist abgerundet ausgeführt, um mechanische Belastungsspitzen zu vermeiden. Am Rand 7 liegt die schaftseitige Schmalseite 12 des Schneideinsatzes 1 an. Beim Einsetzen des Schneidkörpers 1 in den Bohrerschaft 2, vor dem Festdrehen, steht diese Anlagefläche 8 zur Positionierung des Schneidkörpers 1 nicht zu Verfügung. Um den Schneidkörper 1 vor dem Festdrehen definiert zu positionieren ist am Bohrerschaft 2 angrenzend an die Schenkel 9 ein Führungsabsatz 13 sowie am Schneideinsatz 1 ein korrespondierender Führungsabsatz 14 vorgesehen. An den Führungsabsatz 14 des Schneideinsatzes 1 grenzt ein Befestigungszapfen 15, der zur Aufnahme in einer Aufnahmeöffnung 16 des Werkzeugschaftes 2 vorgesehen ist. Die an der Schaftspitze 4 sowie am Bohrerumfang angeordnete Ausnehmung 6 bildet zusammen mit der an diese grenzende Aufnahmeöffnung 16 einen Raum zum Einsetzen des Schneidkörpers 1 einschließlich des Befestigungszapfens 15 in den Werkzeugschaft 2. Der Befestigungszapfen 15 weist eine Fase 17 auf, durch welche das Einsetzen in die Aufnahmeöffnung 16 erleichtert ist. Die Aufnahmeöffnung 16 ist konzentrisch zur Bohrerachse A angeordnet und hat einen kreisrunden Querschnitt, wobei der Querschnitt längs der Bohrerachse A variieren kann. Alternativ zu einer zylindrischen Aufnahmeöffnung 16 kann diese auch konisch ausgebildet sein, insbesondere sich nach unten, das heißt von der Schaftspitze 4 weg, verjüngend. Im umgekehrten Fall einer sich nach unten konisch erweiternden Aufnahmeöffnung 16 ist durch diese eine weitere Sicherung gegen Herausfallen oder Herausziehen des Schneideinsatzes 1 aus dem Werkzeugschaft 2 gegeben. Die Aufnahmeöffnung 16 ist zu den Spannuten 5 hin offen, so dass in jedem Fall ein leichtes Einsetzen des Schneideinsatzes 1 in den Werkzeugschaft 2 ermöglicht ist. Der Schneidkörper 1 ist bei jeder Ausbildung des Befestigungszapfens 15 sowie der Aufnahmeöffnung 16 auf einfache Weise zentrierbar.

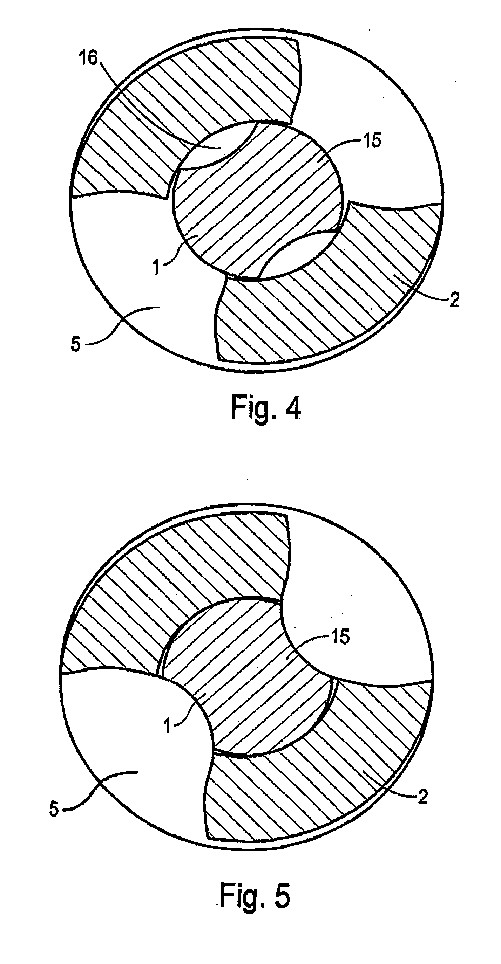

Die Figuren 4 und 5 zeigen im Querschnitt den Werkzeugschaft 2 mit in die Aufnahmeöffnung 16 eingesetzten Befestigungszapfen 15 in gelöster bzw. eingespannter Position. Der Befestigungszapfen 15 hat nach dieser bevorzugten Ausführungsform einen geringfügig elliptischen Querschnitt. Durch den elliptischen Querschnitt hat der Befestigungszapfen 15 beim Einsetzen in die Aufnahmeöffnung 16 etwas Spiel. Durch Drehung des Schneideinsatzes 1 um ca. 45° verspannt sich der Befestigungszapfen 15 in der Aufnahmeöffnung 16. Der Befestigungszapfen 15 ist derart seitlich angeschnitten, dass sich dieser im eingespannten Zustand der Form der Spannuten 5 anpasst. Anstelle eines elliptischen Querschnitts kann der Befestigungszapfen 15 und/oder die Aufnahmeöffnung 16 auch einen sonstigen von der Kreisform abweichenden Querschnitt aufweisen, durch welchen eine Verspannung des Befestigungszapfens 15 in der Aufnahmeöffnung 16 des Bohrerschafts 2 erreichbar ist. Derartige Querschnittsgestaltungen sind beispielsweise bei einem Spannmittel nach der DE 199 45 097 A1 zum dreh- und schubfesten Verbinden einer Welle mit einer Nabe bekannt.

Die geringfügig elliptische Ausbildung des Querschnitts des Befestigungszapfens 15 ist sowohl bei zylindrischer Grundform des Befestigungszapfens 15 als auch bei konischer Ausbildung der Aufnahmeöffnung 16 sowie Befestigungszapfens 15 realisierbar. Im Fall einer sich nach unten konisch erweiternden Aufnahmeöffnung 16 und eines zugleich elliptischen Querschnitts des insgesamt ebenfalls konisch ausgebildeten Befestigungszapfens 15 entsteht beim Eindrehen des Befestigungszapfens 15 in die Aufnahmeöffnung 16 eine Axialkraft, die diesen in die Aufnahmeöffnung 16 zieht und somit die Axialkraft unterstützt, die mittels der Anlageflächen 8,10 den Schneideinsatz 1 am Werkzeugschaft 2 hält.

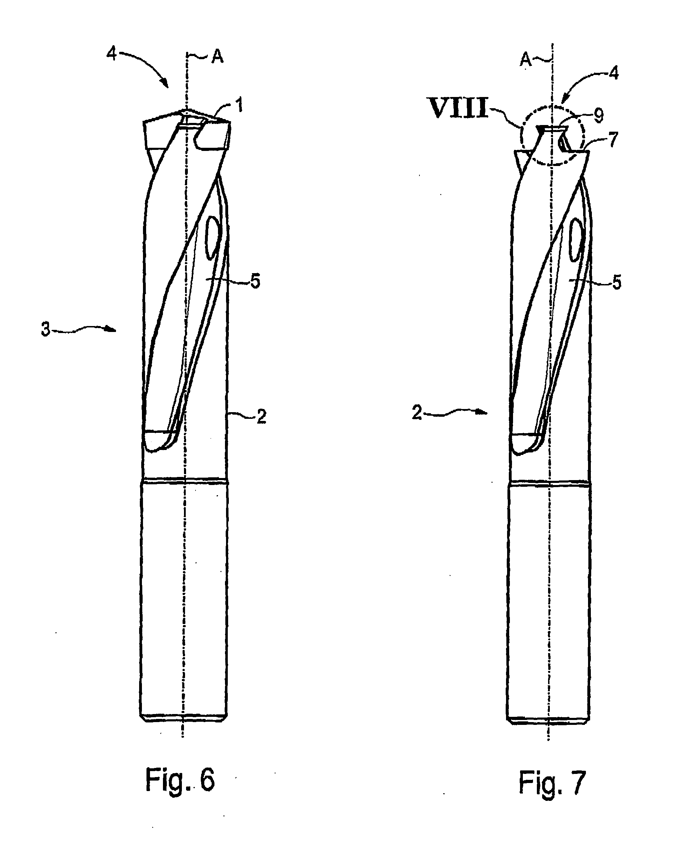

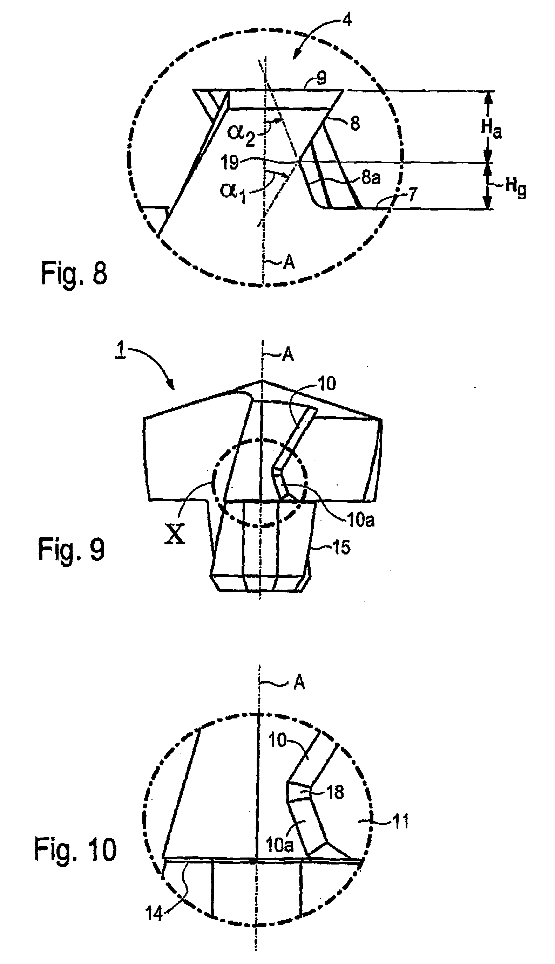

Die Fig. 6 bis 10 zeigen als Rundlaufschneidwerkzeug einen Bohrer 3 beziehungsweise den Werkzeugschaft 2 oder den Schneideinsatz 1 des Bohrers 3 in einer bevorzugten alternativen Ausgestaltung. Hierbei hat der Schenkel 9 des Werkzeugschaftes 2 zusätzlich zur Anlagefläche 8 eine Zusatzanlagefläche 8a. Analog weist der Flügel 11 des Schneideinsatzes 1 eine mit der Zusatzanlagefläche 8a des Werkzeugschaftes 2 korrespondierende Zusatzanlagefläche 10a auf. Im Übrigen entspricht die Gestaltung des Rundlaufschneidwerkzeugs 1 nach diesem zweiten Ausführungsbeispiel im Wesentlichen der Gestaltung nach dem ersten Ausführungsbeispiel. Beide Zusatzanlageflächen 8a,10a sind relativ zur Werkzeugachse A entgegengesetzt zu den Anlageflächen 8,10 schräg gestellt. Zwischen der Anlagefläche 10 und der Zusatzanlagefläche 10a des Flügels 11 erstreckt sich etwa parallel zur Bohrerachse A eine Übergangsfläche 18.

Dagegen ist die Anlagefläche 8 mit der Zusatzanlagefläche 8a des Schenkels 9 lediglich über eine Ausrundung 19 verbunden. Bei in den Werkzeugschaft 2 eingesetztem Schneideinsatz 1 liegt daher die Übergangsfläche 18 nicht am Werkzeugschaft 2 an. Die Drehung des Schneideinsatzes 1 relativ zum Werkzeugschaft 2 beim Zusammensetzen des Bohrers 3 ist daher nicht durch die Übergangsfläche 18, sondern lediglich durch die Anlage- und Zusatzanlageflächen 8,10,8a,10a begrenzt.

Die Anlagefläche 8 des Schenkels 9 erstreckt sich, bezogen auf die Bohrerachse A, über eine Anlagehöhe Hₐ. Die Höhe, über welche sich die Zusatzanlagefläche 8a erstreckt, wird als Gegenanlagehöhe H_{g} bezeichnet. Der Betrag der Anlagehöhe Hₐ übersteigt den Betrag der Gegenanlagehöhe H_{g} um etwa 50 %. Mit der Bohrerachse A schließt die Anlagefläche 8a einen Anlagewinkel α₁ und die Zusatzanlagefläche 8a einen Zusatzanlagewinkel α₂ ein. Der Betrag des Zusatzanlagewinkels α₂ ist geringer als der Betrag des Anlagewinkels α₁. Im dargestellten Ausführungsbeispiel beträgt der Anlagewinkel α₁ 30° und Zusatzanlagewinkel α₂ 20°. Dieser Winkelunterschied trägt zusätzlich zur geringeren Höhe der Zusatzanlagefläche 8a im Vergleich zur Anlagefläche 8 dazu bei, dass die Axialkraft, welche durch die Schrägstellung der Zusatzanlagefläche 8a sowie der korrespondierenden Zusatzanlagefläche 10a des Schneideinsatzes 1 diesen vom Werkzeugschaft 2 weg zieht, geringer ist als die entgegengesetzte Axialkraft aufgrund der Schrägstellung der Anlageflächen 8,10. Es verbleibt somit bei der Bearbeitung eines Werkstücks mit dem Bohrer 3 eine resultierende Kraft, die den Schneideinsatz 1 am Werkzeugschaft 2 festzieht.

Durch die entgegengesetzt zur Anlagefläche 8 schräg gestellte Zusatzanlagefläche 8a des Schenkels 9 ist eine Verstärkung des Werkzeugschaftes 2 am beim Bohren besonders stark belasteten Übergang zwischen dem Schenkel 9 und dem angrenzenden Bereich des Werkzeugschaftes 2 gegeben. Zugleich ist die Stabilität des Schneideinsatzes 1 durch die Zusatzanlagefläche 10a an dessen Flügel 11 nicht beeinträchtigt. Ebenso ist die Möglichkeit des einfachen Einsetzens und Herausnehmens des Schneideinsatzes 1 in den bzw. aus dem Werkzeugschaft 2 durch die Zusatzanlageflächen 8a,10a nicht beeinflusst.

## Patentansprüche

1. Rundlaufschneidwerkzeug (3), zusammengesetzt aus einem Werkzeugschaft (2) mit mindestens einer Spannut (5) und einem auswechselbaren Schneideinsatz (1), bei welchem sich an der Schaftspitze (4) sowie in der Wand der Spannut (5) eine Ausnehmung (6) zur Aufnahme des Schneideinsatzes (1) befindet, die schaftseitig durch einen Rand (7) begrenzt ist, gegen den die schaftseitige Schmalseite (12) des Schneideinsatzes (1) anliegt, und bei welchem der Schneideinsatz (1) einen Befestigungszapfen (15) zur Aufnahme in einer zur Werkzeugachse (A) konzentrischen Aufnahmeöffnung (16) des Werkzeugschaftes (2) aufweist, wobei der Werkzeugschaft (2) an dessen Umfang einen Schenkel (9) mit einer an den Umfang des Werkzeugschaftes (2) grenzenden Anlagefläche (8) aufweist, die relativ zur Werkzeugachse (A) schräg gestellt ist und mit einer ebenso schräg gestellten Anlagefläche (10) an einem Flügel (11) des Schneideinsatzes (1) korrespondiert, wobei der Schneideinsatz (1) die Schaftspitze (4) des Werkzeugschaftes (2) nur teilweise abdeckt, wobei die Anlageflächen (8,10) relativ zur Werkzeugachse (A) einen Anlagewinkel (α₁) von mindestens 15° und höchstens 60° einnehmen und die Orientierung der Schrägstellung der Anlageflächen (8, 10) der Werkzeugdrehrichtung (D) entspricht, so dass durch die schräg gestellten Anlageflächen (8, 10) beim Eindrehen des Scheideinsatzes (1) dieser gegen den Werkzeugschaft (2) gepresst wird.

2. Rundlaufschneidwerkzeug (3) insbesondere nach Anspruch 1, zusammengesetzt aus einem Werkzeugschaft (2) mit mindestens einer Spannut (5) und einem auswechselbaren Schneideinsatz (1), bei welchem sich an der Schaftspitze (4) sowie in der Wand der Spannut (5) eine Ausnehmung (6) zur Aufnahme des Schneideinsatzes (1) befindet, die schaftseitig durch einen Rand (7) begrenzt ist, gegen den die schaftseitige Schmalseite (12) des Schneideinsatzes (1) anliegt, und bei welchem der Schneideinsatz (1) einen Befestigungszapfen (15) zur Aufnahme in einer zur Werkzeugachse (A) konzentrischen Aufnahmeöffnung (16) des Werkzeugschaftes (2) aufweist, wobei der Werkzeugschaft (2) an dessen Umfang einen Schenkel (9) mit einer an den Umfang des Werkzeugschaftes (2) grenzenden Anlagefläche (8) aufweist, die relativ zur Werkzeugachse (A) schräg gestellt ist und mit einer ebenso schräg gestellten Anlagefläche (10) an einem Flügel (11) des Schneideinsatzes (1) korrespondiert, wobei der Schneideinsatz (1) die Schaftspitze (4) des Werkzeugschaftes (2) nur teilweise abdeckt, wobei die Orientierung der Schrägstellung der Anlageflächen (8, 10) der Werkzeugdrehrichtung (D) entspricht, dass die Spannut (5) unter einem Drallwinkel gewendelt ist und die Anlageflächen (8,10) relativ zur Werkzeugachse (A) einen Anlagewinkel (α₁) einnehmen, der dem Drallwinkel entspricht, so dass durch die schräg gestellten Anlageflächen (8, 10) beim Eindrehen das Scheideinsatzes (1) dieser gegen den Werkzeugschaft (2) gepresst wird.

3. Rundlaufschneidwerkzeug (3) nach Anspruch 1 oder 2,
**dadurch gekennzeichnet,**
**dass** der Schneidkörperdurchmesser (Dₛ) größer als der Werkzeugschaftdurchmesser (D_{W}) ist.

4. Rundlaufschneidwerkzeug (3) nach einem der Ansprüche 1 bis 3,
**gekennzeichnet durch**
einen Führungsabsatz (13) am Werkzeugschaft (2) und einen korrespondierenden Führungsabsatz (14) am Schneideinsatz (1).

5. Rundlaufschneidwerkzeug (3) nach einem der Ansprüche 1 bis 4,
**dadurch gekennzeichnet,**
**dass** der Befestigungszapfen (15) im wesentlichen zylinderförmig ist.

6. Rundlaufschneidwerkzeug (3) nach einem der Ansprüche 1 bis 4,
**dadurch gekennzeichnet,**
**dass** der Befestigungszapfen (15) im wesentlichen kegelförmig ist.

7. Rundlaufschneidwerkzeug (3) nach einem der Ansprüche 1 bis 6,
**dadurch gekennzeichnet,**
**dass** der Befestigungszapfen (15) einen elliptischen Querschnitt aufweist.

8. Rundlaufschneidwerkzeug (3) nach einem der Ansprüche 1 bis 7,
**gekennzeichnet durch**
eine bezogen auf die Werkzeugachse (A) entgegengesetzt zur Anlagefläche (8) des Schenkels (9) schräg gestellte Zusatzanlagefläche (8a) am Schenkel (9), welche mit einer Zusatzanlagefläche (10a) am Flügel (11) des Schneideinsatzes (1) korrespondiert.

9. Rundlaufschneidwerkzeug (3) nach Anspruch 8,
**dadurch gekennzeichnet,**
**dass** die Anlagefläche (10) am Flügel (11) des Schneideinsatzes (1) der Schaftspitze (4) und die Zusatzanlagefläche (10a) am Flügel (11) des Schneideinsatzes (1) dem Befestigungszapfen (15) zugewandt ist.

10. Rundlaufschneidwerkzeug (3) nach Anspruch 8 oder 9,
**dadurch gekennzeichnet,**
**dass** die Zusatzanlageflächen (8a, 10a) relativ zur Werkzeugachse (A) einen Zusatzanlagewinkel (α₂) im Bereich von - 10° bis - 60° einnehmen.

11. Rundlaufschneidwerkzeug (3) nach Anspruch 10,
**dadurch gekennzeichnet,**
**dass** der Betrag der Anlagewinkel (α₁) der Anlageflächen (8, 10) den Betrag der Zusatzanlagewinkel (α₂) der Zusatzanlageflächen (8a, 10a) übersteigt.

12. Rundlaufschneidwerkzeug (3) nach einem der Ansprüche 8 bis 11,
**dadurch gekennzeichnet,**
**dass** eine Anlagehöhe (Hₐ), über welche sich die Anlagefläche (8) des Schenkels (9), bezogen auf die Werkzeugachse (A), erstreckt, größer ist als eine Gegenanlagenhöhe (H_{g}), über welche sich die Zusatzanlagefläche (8a) des Schenkels (9), bezogen auf die Werkzeugachse (A), erstreckt.

13. Schneideinsatz (1) für ein aus diesem sowie einem Werkzeugschaft (2) zusammengesetztes Rundlaufschneidwerkzeug (3) nach einem der Ansprüche 1 bis 12, wobei der Schneideinsatz (1) in einer Ausnehmung (6), welche sich an der Schaftspitze (4) sowie in der Wand einer Spannut (5) des Werkzeugschaftes (2) befindet, aufnehmbar ist und hierbei eine schaftseitige Schmalseite (12) des Schneideinsatzes (1) zur Anlage an einem die Ausnehmung (6) begrenzenden Rand (7) des Werkieugschaftes (2) vorgesehen ist, mit einem Befestigungszapfen (15) zur Aufnahme in einer zur Werkzeugachse (A) konzentrischen Aufnahmeöffnung (16) des Werkzeugschaftes (2), sowie mit einem Flügel (11) mit einer schräg gestellten Anlagefläche (10), welche zur Zusammenwirkung mit einer ebenso relativ zur Werkzeugachse (A) schräg gestellten Anlagefläche (8) des Werkzeugschaftes (2) vorgesehen ist, wobei die Anlagefläche (10) des Schneideinsatzes (1) an dessen Umfang grenzt und sich bis zur vorderen Stirnfläche des Schneideinsatzes (1) erstreckt, so dass der Schneideinsatz (1) unter nur teilweiser Abdeckung der Schaftspitze (4) des Werkzeugschaftes (2) in diesem aufnehmbar ist, wobei die Anlagefläche (10) des Schneideinsatzes (1) relativ zur Werkzeugachse (A) einen Anlagewinkel (α₁) von mindestens 15° und höchstens 60° einnimmt und dass die Orientierung der Schrägstellung der Anlageflächen (8,10) der Werkzeugdrehrichtung (D) entspricht, so dass durch die schräg gestellte Anlagefläche (10) beim Eindrehen des Scheideinsatzes (1) dieser gegen den Werkzeugschaft (2) gepresst wird.

## Claims

1. Rotary cutting tool (3), composed of a tool shank (2) having at least one flute (5) and of an exchangeable cutting insert (1), in which a recess (6) for accommodating the cutting insert (1) is located at the shank tip (4) and in the wall of the flute (5), said recess (6) being defined on the shank side by a margin (7), against which the shank-side narrow side (12) of the cutting insert (1) bears, and in which the cutting insert (1) has a fastening pin (15) for accommodating in a locating opening (16), concentric to the tool axis (A), of the tool shank (2), wherein the tool shank (2) has at its circumference a leg (9) having a bearing surface (8) which borders the circumference of the tool shank (2) and which is inclined relative to the tool axis (A) and corresponds with a likewise inclined bearing surface (10) on a lobe (11) of the cutting insert (1), wherein the cutting insert (1) only partly covers the shank tip (4) of the tool shank (2), wherein the bearing surfaces (8, 10) assume a bearing angle (α₁) of at least 15° and at most 60° relative to the tool axis (A) and the orientation of the inclination of the bearing surfaces (8, 10) corresponds to the tool rotation direction (D), such that, due to the inclined bearing surfaces (8, 10), the cutting insert (1) is pressed against the tool shank (2) when the cutting insert (1) is rotated into position.

2. Rotary cutting tool (3) in particular according to Claim 1, composed of a tool shank (2) having at least one flute (5) and of an exchangeable cutting insert (1), in which a recess (6) for accommodating the cutting insert (1) is located at the shank tip (4) and in the wall of the flute (5), said recess (6) being defined on the shank side by a margin (7), against which the shank-side narrow side (12) of the cutting insert (1) bears, and in which the cutting insert (1) has a fastening pin (15) for accommodating in a locating opening (16), concentric to the tool axis (A), of the tool shank (2), wherein the tool shank (2) has at its circumference a leg (9) having a bearing surface (8) which borders the circumference of the tool shank (2) and which is inclined relative to the tool axis (A) and corresponds with a likewise inclined bearing surface (10) on a lobe (11) of the cutting insert (1), wherein the cutting insert (1) only partly covers the shank tip (4) of the tool shank (2), wherein the orientation of the inclination of the bearing surfaces (8, 10) corresponds to the tool rotation direction (D), wherein the flute (5) is twisted at a helix angle and the bearing surfaces (8, 10) assume a bearing angle (α₁) relative to the tool axis (A), said bearing angle (α₁) corresponding to the helix angle, such that, due to the inclined bearing surfaces (8, 10), the cutting insert (1) is pressed against the tool shank (2) when the cutting insert (1) is rotated into position.

3. Rotary cutting tool (3) according to Claim 1 or 2, **characterized in that** the cutting body diameter (D_{S}) is greater than the tool shank diameter (D_{W}).

4. Rotary cutting tool (3) according to one of Claims 1 to 3, **characterized by** a guide step (13) on the tool shank (2) and by a corresponding guide step (14) on the cutting insert (1).

5. Rotary cutting tool (3) according to one of Claims 1 to 4, **characterized in that** the fastening pin (15) is substantially cylindrical.

6. Rotary cutting tool (3) according to one of Claims 1 to 4, **characterized in that** the fastening pin (15) is substantially conical.

7. Rotary cutting tool (3) according to one of Claims 1 to 6, **characterized in that** the fastening pin (15) has an elliptical cross section.

8. Rotary cutting tool (3) according to one of Claims 1 to 7, **characterized by** an additional bearing surface (8a) on the leg (9), said additional bearing surface (8a) being inclined with respect to the tool axis (A) in opposition to the bearing surface (8) of the leg (9) and corresponding with an additional bearing surface (10a) on the lobe (11) of the cutting insert (1).

9. Rotary cutting tool (3) according to Claim 8, **characterized in that** the bearing surface (10) on the lobe (11) of the cutting insert (1) faces the shank tip (4) and the additional bearing surface (10a) on the lobe (11) of the cutting insert (1) faces the fastening pin (15).

10. Rotary cutting tool (3) according to Claim 8 or 9, **characterized in that** the additional bearing surfaces (8a, 10a) assume an additional bearing angle (α₂) within the range of -10° to -60° relative to the tool axis (A).

11. Rotary cutting tool (3) according to Claim 10, **characterized in that** the magnitude of the bearing angles (α₁) of the bearing surfaces (8, 10) exceeds the magnitude of the additional bearing angles (α₂) of the additional bearing surfaces (8a, 10a).

12. Rotary cutting tool (3) according to one of Claims 8 to 11, **characterized in that** a bearing height (Hₐ) over which the bearing surface (8) of the leg (9) extends with respect to the tool axis (A) is greater than an opposing bearing height (H_{g}) over which the additional bearing surface (8a) of the leg (9) extends with respect to the tool axis (A).

13. Cutting insert (1) for a rotary cutting tool (3) composed of said cutting insert (1) and of a tool shank (2) according to one of Claims 1 to 12, wherein the cutting insert (1) can be accommodated in a recess (6) which is located at the shank tip (4) and in the wall of a flute (5) of the tool shank (2), and in this connection a shank-side narrow side (12) of the cutting insert (1) is provided for bearing against a margin (7), defining the recess (6), of the tool shank (2), having a fastening pin (15) for accommodating in a locating opening (16), concentric to the tool axis (A), of the tool shank (2) and having a lobe (11) with an inclined bearing surface (10) which is provided for interacting with a bearing surface (8), likewise inclined relative to the tool axis (A), of the tool shank (2), wherein the bearing surface (10) of the cutting insert (1) borders the circumference thereof and extends up to the front end face of the cutting insert (1), such that the cutting insert (1) can be accommodated in the tool shank (2) with the shank tip (4) of the latter only being partly covered, wherein the bearing surface (10) of the cutting insert (1) assumes a bearing angle (α₁) of at least 15° and at most 60° relative to the tool axis (A) and wherein the orientation of the inclination of the bearing surface (10) corresponds to the tool rotation direction (D), such that, due to the inclined bearing surface (10), the cutting insert (1) is pressed against the tool shank (2) when the cutting insert (1) is rotated into position.

## Revendications

1. Outil de coupe rotatif (3) constitué d'un arbre d'outil (2) avec au moins une rainure de serrage (5) et un insert de coupe remplaçable (1), dans lequel un évidement (6) pour recevoir l'insert de coupe (1) se trouve au niveau de la pointe de l'arbre (4) ainsi que dans la paroi de la rainure de serrage (5), lequel évidement est limité côté arbre par un bord (7), contre lequel s'applique le petit côté (12) côté arbre de l'insert de coupe (1), et dans lequel l'insert de coupe (1) présente un tourillon de fixation (15) à loger dans une ouverture de réception (16) de l'arbre d'outil (2), concentrique à l'axe d'outil (A), l'arbre d'outil (2) présentant sur sa périphérie une branche (9) avec une surface d'appui (8) adjacente à la périphérie de l'arbre d'outil (2), qui est positionnée obliquement par rapport à l'axe d'outil (A) et qui correspond à une surface d'appui (10) également positionnée obliquement sur une aile (11) de l'insert de coupe (1), l'insert de coupe (1) recouvrant seulement partiellement la pointe d'arbre (4) de l'arbre d'outil (2),
les surfaces d'appui (8, 10) formant par rapport à l'axe d'outil (A) un angle d'appui (α₁) d'au moins 15° et d'au plus 60°, et l'orientation de la position oblique des surfaces d'appui (8, 10) correspondant à la direction de rotation de l'outil (D), de sorte que lors du vissage de l'insert de coupe (1), celui-ci soit pressé contre l'arbre d'outil (2) par les surfaces d'appui (8, 10) positionnées obliquement.

2. Outil de coupe rotatif (3), en particulier selon la revendication 1, constitué d'un arbre d'outil (2) avec au moins une rainure de serrage (5) et un insert de coupe remplaçable (1), dans lequel un évidement (6) pour recevoir l'insert de coupe (1) se trouve au niveau de la pointe de l'arbre (4) ainsi que dans la paroi de la rainure de serrage (5), lequel évidement est limité côté arbre par un bord (7), contre lequel s'applique le petit côté (12) côté arbre de l'insert de coupe (1), et dans lequel l'insert de coupe (1) présente un tourillon de fixation (15) à loger dans une ouverture de réception (16) de l'arbre d'outil (2), concentrique à l'axe d'outil (A), l'arbre d'outil (2) présentant sur sa périphérie une branche (9) avec une surface d'appui (8) adjacente à la périphérie de l'arbre d'outil (2), qui est positionnée obliquement par rapport à l'axe d'outil (A) et qui correspond à une surface d'appui (10) également positionnée obliquement sur une aile (11) de l'insert de coupe (1), l'insert de coupe (1) recouvrant seulement partiellement la pointe d'arbre (4) de l'arbre d'outil (2),
l'orientation de la position oblique des surfaces d'appui (8, 10) correspondant à la direction de rotation de l'outil (D), la rainure de serrage (5) étant enroulée suivant un angle de rotation et les surfaces d'appui (8, 10) formant par rapport à l'axe d'outil (A) un angle d'appui (α₁) qui correspond à l'angle de rotation, de sorte que lors du vissage de l'insert de coupe (1), celui-ci soit pressé contre l'arbre d'outil (2) par les surfaces d'appui (8, 10) positionnées obliquement.

3. Outil de coupe rotatif (3) selon la revendication 1 ou 2,
**caractérisé en ce que**
le diamètre du corps de coupe (D_{S}) est supérieur au diamètre de l'arbre d'outil (D_{W}).

4. Outil de coupe rotatif (3) selon l'une quelconque des revendications 1 à 3,
**caractérisé par** un épaulement de guidage (13) sur l'arbre d'outil (2) et un épaulement de guidage correspondant (14) sur l'insert de coupe (1).

5. Outil de coupe rotatif (3) selon l'une quelconque des revendications 1 à 4,
**caractérisé en ce que** le tourillon de fixation (15) est sensiblement cylindrique.

6. Outil de coupe rotatif (3) selon l'une quelconque des revendications 1 à 4,
**caractérisé en ce que**
le tourillon de fixation (15) est sensiblement conique.

7. Outil de coupe rotatif (3) selon l'une quelconque des revendications 1 à 6,
**caractérisé en ce que**
le tourillon de fixation (15) présente une section transversale elliptique.

8. Outil de coupe rotatif (3) selon l'une quelconque des revendications 1 à 7,
**caractérisé par** une surface d'appui supplémentaire (8a) sur la branche (9) positionnée obliquement par rapport à l'axe d'outil (A) à l'opposé de la surface d'appui (8) de la branche (9), qui correspond à une surface d'appui supplémentaire (10a) sur l'aile (11) de l'insert de coupe (1).

9. Outil de coupe rotatif (3) selon la revendication 8,
**caractérisé en ce que**
la surface d'appui (10) sur l'aile (11) de l'insert de coupe (1) est tournée vers la pointe d'arbre (4) et la surface d'appui supplémentaire (10a) sur l'aile (11) de l'insert de coupe (1) est tournée vers le tourillon de fixation (15).

10. Outil de coupe rotatif (3) selon la revendication 8 ou 9,
**caractérisé en ce que**
les surfaces d'appui supplémentaires (8a, 10a) forment par rapport à l'axe d'outil (A) un angle d'appui supplémentaire (α₂) de l'ordre de -10° à - 60°.

11. Outil de coupe rotatif (3) selon la revendication 10,
**caractérisé en ce que**
la valeur de l'angle d'appui (α₁) des surfaces d'appui (8, 10) est supérieure à la valeur de l'angle d'appui supplémentaire (α₂) des surfaces d'appui supplémentaires (8a, 10a).

12. Outil de coupe rotatif (3) selon l'une quelconque des revendications 8 à 11,
**caractérisé en ce que**
une hauteur d'appui (Hₐ), sur laquelle s'étend la surface d'appui (8) de la branche (9), par rapport à l'axe d'outil (A), est supérieure à une hauteur d'appui conjuguée (Hg), sur laquelle s'étend la surface d'appui supplémentaire (8a) de la branche (9), par rapport à l'axe d'outil (A).

13. Insert de coupe (1) pour un outil de coupe rotatif (3) selon l'une quelconque des revendications 1 à 12 constitué de celui-ci ainsi que d'un arbre d'outil (2), dans lequel l'insert de coupe (1) peut être reçu dans un évidement (6) qui se trouve au niveau de la pointe d'arbre (4) ainsi que dans la paroi d'une rainure de serrage (5) de l'arbre d'outil (2), et dans ce cas, un petit côté (12) côté arbre de l'insert de coupe (1) est prévu pour s'appliquer contre un bord (7) de l'arbre d'outil (2) adjacent à l'évidement (6), avec un tourillon de fixation (15) à loger dans une ouverture de réception (16) de l'arbre d'outil (2), concentrique à l'axe d'outil (A), et avec une aile (11) avec une surface d'appui (10) positionnée obliquement, qui est prévue pour coopérer avec une surface d'appui (8) de l'arbre d'outil (2) également positionnée obliquement par rapport à l'axe d'outil (A), la surface d'appui (10) de l'insert de coupe (1) étant adjacente à la périphérie de ce dernier et s'étendant jusqu'à la surface frontale avant de l'insert de coupe (1), de sorte que l'insert de coupe (1) puisse être reçu avec un recouvrement seulement partiel de la pointe d'arbre (4) de l'arbre d'outil (2) dans ce dernier,
la surface d'appui (10) de l'insert de coupe (1) formant par rapport à l'axe d'outil (A) un angle d'appui (α₁) d'au moins 15° et d'au plus 60° et l'orientation de la position oblique de la surface d'appui (10) correspondant à la direction de rotation de l'outil (D), de sorte que lors du vissage de l'insert de coupe (1), celui-ci soit pressé contre l'arbre d'outil (2) par la surface d'appui (10) positionnée obliquement.
